# EUROPÄISCHE PATENTSCHRIFT

(11) **EP 1 243 473 B1**
(45) Veröffentlichungstag und Bekanntmachung des Hinweises auf die Patenterteilung: **03.03.2004**
(21) Anmeldenummer: 02005967.1
(22) Anmeldetag: 15.03.2002
(51) Int. Cl.: B60R 5/00

(54) **Transportbehälter-Einrichtung für den Einbau in Kraftfahrzeuge, wie z.B. Durchladeeinrichtung**
Transport container device for installation in a motor vehicle for example a device with a loading opening
Dispositif à conteneur de transport pour le montage dans un véhicule par exemple un dispositif à évidement de chargement

(30) Priorität: 20.03.2001 DE 10113619
(43) Veröffentlichungstag der Anmeldung: 25.09.2002
(73) Patentinhaber: BOS GmbH & Co. KG, 73760 Ostfildern (DE)
(72) Erfinder: Sitzler, Wolfgang, 42111 Wuppertal (DE)
(74) Vertreter: Patentanwälte Ostriga & Sonnet

(56) Entgegenhaltungen:
- DE-C- 10 004 021
- DE-C- 19 727 499

## Beschreibung

Die Erfindung betrifft eine Transportbehälter-Einrichtung für den Einbau in Kraftfahrzeuge, wie z.B. Durchladeeinrichtung, insbesondere für den sitzlehnen- oder kofferraumwandseitigen Einbau in Personenkraftwagen, entsprechend dem Oberbegriff des Anspruchs 1. Eine solche Transportbehälter-Einrichtung ist in der DE 100 04 021 A1 beschrieben.

Der Erfindung liegt die Aufgabe zugrunde, die bekannte Transportbehälter-Einrichtung in baulich einfacher Weise weiterzuentwickeln, um zusätzliche Verwendungsmöglichkeiten zu schaffen.

In Verbindung mit den Merkmalen des Oberbegriffs wird diese Aufgabe entsprechend der Erfindung durch die Gesamtheit der Merkmale des Anspruchs 1 gelöst.

Entsprechend der Erfindung ist es möglich geworden, ein mit einem Halterahmen versehenes Einsatzmodul mit einem elektrischen Verbraucher, wie z.B. mit einem Telekommunikationsgerät oder mit einem Kühlgerät, auszustatten und hierbei die elektrische Einspeisung zugleich mit dem Einsetzen und Verriegeln des Einsatzmoduls herzustellen. Die erfindungsgemäßen elektrischen Kontaktverbindungen können sowohl der Leistungseinspeisung, z.B. eines Kältekompressors, als auch der Kontaktverbindung zwischen Signalleitungen dienen.

Weitere vorteilhafte Erfindungsmerkmale ergeben sich aus den Unteransprüchen.

In den Zeichnungen ist die Erfindung anhand eines bevorzugten Ausführungsbeispiels näher dargestellt, es zeigt
Fig. 1 eine räumliche Darstellung eines Befestigungsrahmens,
Fig. 2 eine Schnittdarstellung entsprechend der in Fig. 1 mit II-II bezeichneten Schnittlinie, wobei eine Teilkontur des Halterahmens gestrichelt eingetragen ist,
Fig. 3 einen Querschnitt durch die Anordnung Befestigungsrahmen /-Halterahmen entsprechend der Schnittlinie III-III in Fig. 2 und
Fig. 4 einen teilweisen Längsschnitt entsprechend der in Fig. 1 mit IV-IV bezeichneten Schnittlinie.

Ein Befestigungsrahmen 10 einer Transport-Einrichtung, wie z.B. einer Skisack-Durchladeeinrichtung oder einer Durchladeeinrichtung mit einem Einsatzmodul 33, weist einen Flanschbereich 11 und einen Rahmenbereich 12 auf. Der Rahmenbereich 12 umgrenzt eine Rahmenöffnung 13. Der Flanschbereich 11 ist mit Befestigungslöchern 14 zur Befestigung des Befestigungsrahmens 10 rund um eine nicht dargestellte, z.B. kofferraumwandseitige, Durchladeöffnung versehen, welche im wesentlichen mit der Rahmenöffnung 13 ausgerichtet ist.

Der Rahmenbereich 12 weist einen oberen Querrahmenschenkel 15, einen unteren Querrahmenschenkel 16 sowie zwei einander parallele Längsrahmenschenkel 17, 18 auf. Außen in den Längsrahmenschenkeln 17, 18 ist je eine Führungsnut 20 eingearbeitet, welche der translatorischen Führung je einer Riegelleiste 21 dient, an welcher je zwei Riegelzapfen 22 befestigt sind, deren freie Enden jeweils zur Rahmenöffnung 13 hinweisen.

Die Riegelzapfen 22 durchsetzen Langlöcher 23 der Längsrahmenschenkel 17, 18. Die Längsachsen der Langlöcher 23 erstrecken sich parallel zu den mit y und z bezeichneten Bewegungsrichtungen der Riegelleisten 21, also auch der Riegelzapfen 22.

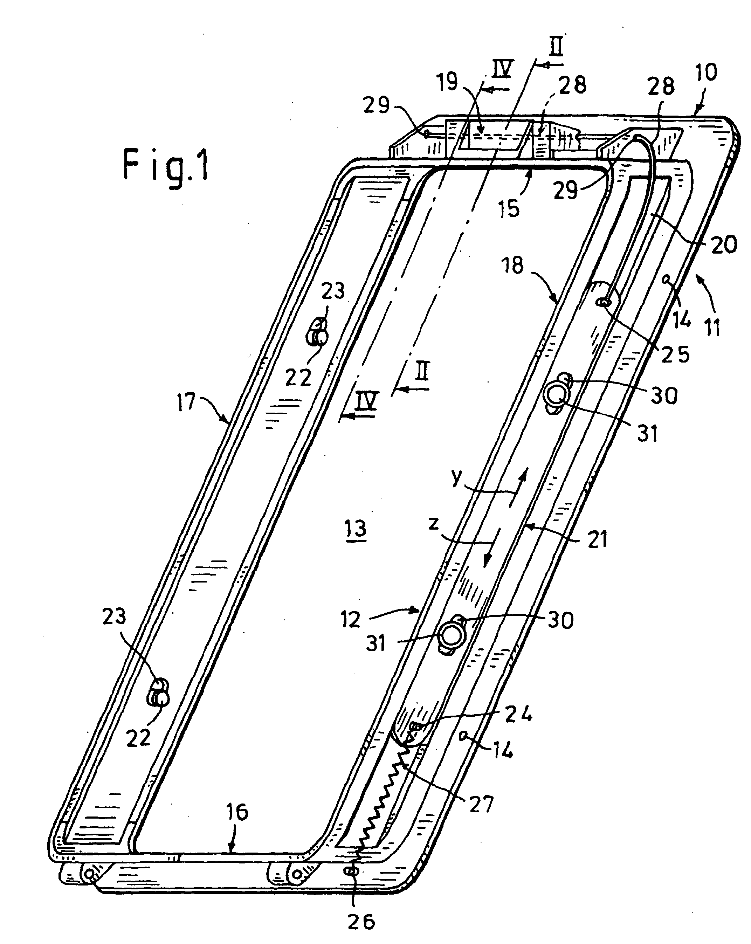

Jede Riegelleiste 21 weist einen unteren und einen oberen Haltezapfen 24, 25 auf. Der Flanschbereich 11 des Befestigungsrahmens 10 weist zwei Widerlagerzapfen 26 auf, von denen in Fig. 1 nur einer sichtbar ist.

Zwischen den unteren Haltezapfen 24 und den Widerlagerzapfen 26 ist jeweils eine Zugfeder 27 aufgespannt, während die beiden oberen Haltezapfen 25 der beiden Riegelleisten 21 über ein Zugmittel, im vorliegenden Fall über eine Drahtlitze 28, miteinander verbunden sind.

Die Drahtlitze 28 ist am Rahmenbereich 12 des Befestigungsrahmens 10 bewegungsgeführt, beispielsweise in Durchgriffslöchern 29. Die Drahtlitze 28 wird demnach durch die beiden Zugfedern 27 angespannt.

Zur Führung und Sicherung weisen die beiden Riegelleisten 21 jeweils zwei sich mit ihren langen Achsen entlang den Bewegungsrichtungen y und z erstreckende Langlöcher 30 auf, welche von in den Längsrahmenschenkeln 17, 18 gehaltenen Befestigungsschrauben 31 durchgriffen sind. Die Befestigungsschrauben 31 sind derart bemessen und angeordnet, dass sie gegenüber den Langlöchern 30 ein Bewegungsspiel gestatten.

Der Halterrahmen 32, im vorliegenden Fall eines insgesamt mit 33 bezeichneten starren Behältermoduls, bildet symmetrisch aufgebaute matrizenartige Riegellöcher 34, welche jeweils einen etwa halbkreisförmigen Riegelbereich 35 und, in symmetrischer Anordnung zu den beiden halbkreisförmigen Riegelbereichen 35, einen etwa trichterförmigen Einführungsbereich 36 darstellen.

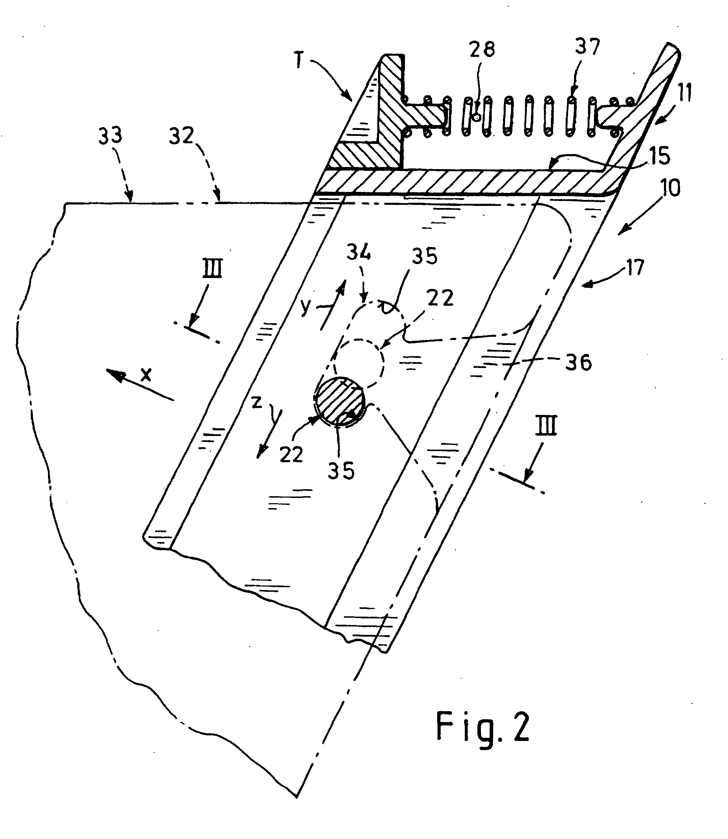

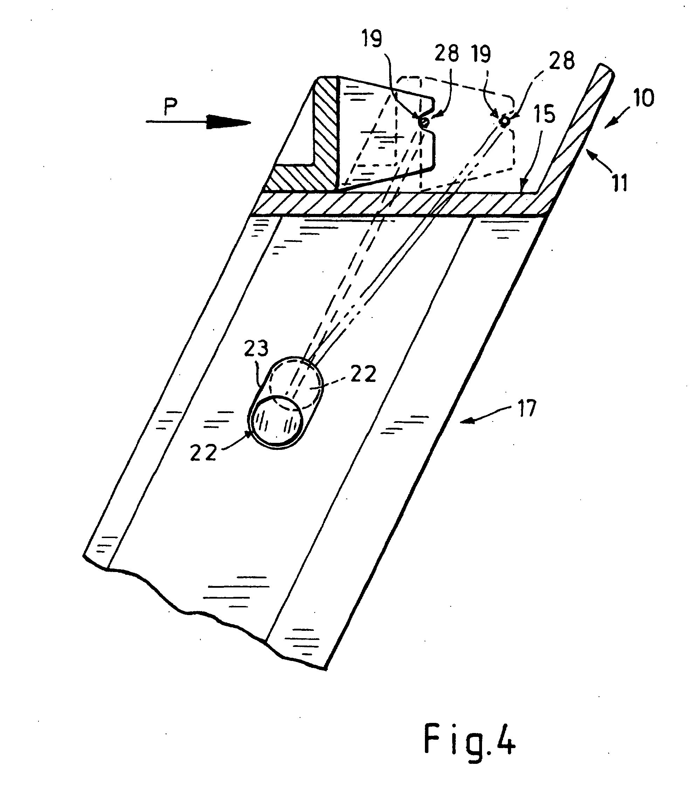

Sobald auf die Betätigungstaste T entgegen der Rückstellkraft der Schraubendruckfedern 37 ein Betätigungsdruck P auf den Bereich 19 der Drahtlitze 28 ausgeübt wird, verlagert sich die Drahtlitze 28, wie aus Fig. 4 ersichtlich, in Richtung des Drucks P nach rechts und zieht dabei die Riegelleisten 21 mit Riegelzapfen 22 in die gestrichelt eingetragene Lösestellung letzterer gemäß den Fig. 2 und 4, was eine Herausnahme des Behältermoduls 33 in Demontagerichtung x gestattet.

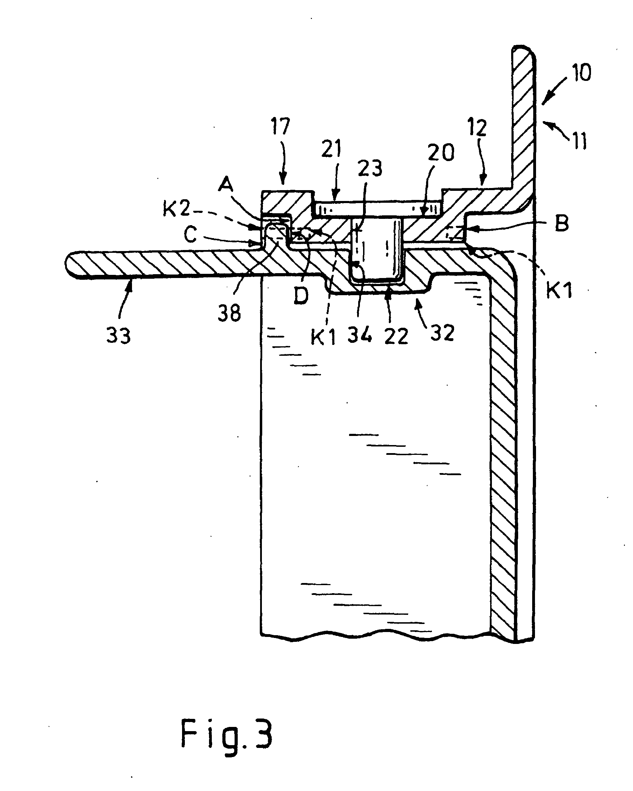

Aus Fig. 3 wird deutlich, dass der Befestigungsrahmen 10 jeweils eine Anschlagfläche A und B bildet, welchen Gegenanschlagflächen C und D einer modulseitigen Anschlagleiste 38 entsprechen. Dadurch wird deutlich, dass das Behältermodul 33 mit seinem Halterahmen 32 sowohl von links oder von rechts oder auch - dank der symmetrischen Anordnung der Riegellöcher 34 gemäß Fig. 2 - auch in Überkopfanordnung in den Befestigungsrahmen 10 lösbar eingesetzt werden kann.

Aus Fig. 3 wird auch deutlich, dass in den Halterahmen 10, und zwar in dessen Anschlagflächen A und B, gestrichelt eingetragene Druckkontaktpaare K1 eingelassen sind, welche mit korrespondierenden Gegenkontaktpaaren K2, welche in der modulseitigen Anschlagleiste 38 angeordnet sind, kooperieren. Die Kontaktpaare K1, K2 sind als Druckkontakte ausgebildet. Die Kontaktpaare K1 zeigen mit ihren Druckkontaktflächen nach links (s. Anschlagfläche A) und nach rechts (s. Anschlagfläche B), während die in der Anschlagleiste 38 eingelassenen Gegenkontaktpaare K2 mit ihren Druckkontaktflächen sowohl nach links als auch nach rechts zeigen. Auf diese Weise kann das Behältermodul 33 mit seinem Halterahmen 32 sowohl von links oder von rechts oder auch - dank der symmetrischen Anordnung der Riegellöcher 34 gemäß Fig. 2 und bei entsprechender Anordnung der Kontaktpaare K1 und der Gegenkontaktpaare K2-auch in Überkopfanordnung in den Befestigungsrahmen 10 lösbar eingesetzt werden.

Auf die Darstellung von mit den Kontaktpaaren K1 und den Gegenkontaktpaaren K2 verbundenen elektrischen Leitungen wurde verzichtet.

## Patentansprüche

1. Transportbehälter-Einrichtung für den Einbau in Kraftfahrzeuge, wie z.B. Durchladeeinrichtung, insbesondere für den sitzlehnen- oder kofferraumwandseitigen Einbau in Personenkraftwagen, mit einem in einer fahrzeugseitigen Durchladeöffnung anzubringenden, einen Halterahmen (32) des Transportbehälters (33) lösbar arretierenden Befestigungsrahmen (10), welchem mindestens ein mit einem Gegenriegelelement (34) des Halterahmens (32) kooperierendes Riegelelement (22) und gegebenenfalls mindestens ein mit dem Riegelelement (22) bewegungsverbundenes-Antriebselement (T) zugeordnet sind, **dadurch gekennzeichnet, dass** der Befestigungsrahmen (10) mindestens ein elektrisches Kontaktpaar (K1) und der Halterahmen (32) mindestens ein mit dem elektrischen Kontaktpaar (K1) zusammenwirkendes korrespondierendes elektrisches Gegenkontaktpaar (K2) aufweist, dass das Kontaktpaar (K1) und das Gegenkontaktpaar (K2) in einer Fuge (bei A, D) zwischen dem Befestigungsrahmen (10) und dem Halterahmen (32) angeordnet sind, und dass die Kontaktverbindung zwischen dem Kontaktpaar (K1) und dem korrespondierenden Gegenkontaktpaar (K2) durch den Einbau des Halterahmens (32) hergestellt und durch die Schließlage von Riegelelement (22) und Gegenriegelelement (34) gesichert ist:

2. Transportbehälter-Einrichtung nach Anspruch 1, **dadurch gekennzeichnet, dass** Kontaktpaar (K1) und Gegenkontaktpaar (K2) eine Steckkontaktverbindung bilden.

3. Transportbehälter-Einrichtung nach Anspruch 1, **dadurch gekennzeichnet, dass** Kontaktpaar (K1) und Gegenkontaktpaar (K2) eine Druckkontaktverbindung bilden.

4. Transportbehälter-Einrichtung nach einem der Ansprüche 1 bis 3, **dadurch gekennzeichnet, dass** der Befestigungsrahmen (10) jeweils eine Anschlagfläche (A, B) bildet, welchen Gegenanschlagflächen (D, C) des Halterahmens (32) entsprechen, und dass die miteinander korrespondierenden Kontaktpaare (K1) und Gegenkontaktpaare (K2) zwischen der Anschlagfläche (A, D) und der Gegenanschlagfläche (D, C) angeordnet sind.

## Claims

1. Transport container device for installation in motor vehicles, such as e.g. a pass-through device, in particular for installation in the backrest or boot panel of passenger cars, comprising a fastening frame (10), which is to be mounted in a pass-through opening of the vehicle and releasably secures a mounting frame (32) of the transport container (33) and with which are associated at least one locking element (22), which cooperates with a counterpart locking element (34) of the mounting frame (32), and optionally at least one operating element (T) motionally connected to the locking element (22), **characterized in that** the fastening frame (10) has at least one electrical contact pair (K1) and the mounting frame (32) has at least one corresponding electrical counter-contact pair (K2) cooperating with the electrical contact pair (K1), that the contact pair (K1) and the counter-contact pair (K2) are disposed in a joint (at A, D) between the fastening frame (10) and the mounting frame (32), and that the contact connection between the contact pair (K1) and the corresponding counter-contact pair (K2) is established by the installation of the mounting frame (32) and secured by the closed position of locking element (22) and counterpart locking element (34).

2. Transport container device according to claim 1, **characterized in that** contact pair (K1) and counter-contact pair (K2) form a plug-in contact connection.

3. Transport container device according to claim 1, **characterized in that** contact pair (K1) and counter-contact pair (K2) form a butt contact connection.

4. Transport container device according to one of claims 1 to 3, **characterized in that** the fastening frame (10) forms in each case a stop face (A, B), to which counterpart stop faces (D, C) of the mounting frame (32) correspond, and that the mutually corresponding contact pairs (K1) and counter-contact pairs (K2) are disposed between the stop face (A, D) and the counterpart stop face (D, C).

## Revendications

1. Dispositif à conteneur de transport, pour le montage dans des véhicules automobiles, tel que par exemple un dispositif à évidement de chargement, en particulier pour le montage, du côté de la paroi de dossier ou de coffre à bagages, dans des voitures particulières, avec un cadre de fixation (10), à monter dans une ouverture à évidement de chargement située côté véhicule, immobilisant de façon désolidarisable un cadre de maintien (32) du conteneur de transport (33), cadre de fixation auquel sont associés au moins un élément de verrouillage (22) coopérant avec un élément de verrouillage conjugué (34) du cadre de maintien (32) et, le cas échéant, au moins un élément d'entraînement (T), relié cinématiquement à l'élément de verrouillage (22), **caractérisé en ce que** le câble de fixation (10) présente au moins une paire de contacts électriques (K1), et le cadre de maintien (32) présente au moins une paire de contacts conjugués électriques (K2) correspondant, coopérant avec la paire de contacts électriques (K1), **en ce que** la paire de contacts (K1) et la paire de contacts conjugués (K2) sont disposées dans un joint (en A, D), ménagé entre le cadre de fixation (10) et le cadre de maintien (32), et **en ce que** la liaison par contact, entre la paire de contacts (K1) et la paire de contacts conjugués (K2) correspondante, est établie par le montage du cadre de maintien (32) et assurée par la position de fermeture de l'élément de verrouillage (22) et de l'élément de verrouillage conjugué (34).

2. Dispositif à conteneur de transport selon la revendication 1, **caractérisé en ce que** la paire de contacts (K1) et la paire de contacts conjugués (K2) forment une liaison à contact par enfichage.

3. Dispositif à conteneur de transport selon la revendication 1, **caractérisé en ce que** la paire de contact (K1) et la paire de contacts conjugués (K2) forment une liaison par contact de pression.

4. Dispositif à conteneur de transport selon l'une des revendications 1 à 3, **caractérisé en ce que** le cadre de fixation (10) forme respectivement une surface de butée (A, B), auxquelles correspondent des surfaces de butée conjuguée (D,C) du cadre de maintien (32), et **en ce que** les paires de contact (K1) et les paires de contacts conjugés (K2), se correspondant l'une l'autre, sont disposées entre la face de butée (A, D) et la face de butée conjuguée (D, C).
